# EUROPEAN PATENT APPLICATION

(11) **EP 3 730 256 A1**
(43) Date of publication of application: **28.10.2020**
(21) Application number: 19305543.1
(22) Date of filing: 26.04.2019
(51) Int. Cl.: B25J 9/16

(54) **SERVO CONTROL METHOD AND SYSTEM FOR CONTROLLING MOVEMENT OF A ROBOT**

(71) Applicant: Prophesee, 75012 Paris (FR)
(72) Inventor: The designation of the inventor has not yet been filed
(74) Representative: Plasseraud IP

(57) **Abstract**

The servo control method for controlling movement of a robot (2) with respect to an object (A) with which the robot interacts, comprises receiving events from at least one event-based light sensor (10), depending on the variation of incident light from a workspace including the robot and the object, processing the events to extract motion characteristics of the robot and/or the object, and adjusting the movement of the robot according to the extracted motion characteristics.

## Description

The present invention relates to industrial automation, especially to a method and a system of servo control for controlling movement of a robot.

### BACKGROUND

Robots, especially robotic arms, are commonly used in automation of manufacturing, for example in the automotive industry, where an object, such as a vehicle chassis, is moving on a conveyor and a robotic arm is interacting with the object. In order to determine the relative position between the robots and the object with which they interact, it is necessary to provide an accurate robotic position regulation. This is more important for high speed robots, where a fast speed and satisfactory accuracy is required for high productivity, and the ability to adapt to many uncertainties leads to task flexibility and efficiency that eventually helps reduce cost.

In the art, the position of the robot can be determined by a servo control system. One type of such a control system includes a mechanical sensor mounted within moveable joints of the device, and then the position can be calculated. Alternatively, the other type of the control system includes cameras that monitor both the mechanically controlled robot and the object by means of video captured by the cameras. The cameras are either fixed so as to observe key portions of the working space or mounted to a robotic arm, referred as an "eye-in-hand" camera, so as to move with the robot to reach a moving object.

For the mechanical sensor, the accuracy of the sensing and control will depend upon the accuracy of the mechanical sensor used, and some uncertainties may occur, generally taken into account by closed control loops. For the frame-based camera, accuracy will be determined by both resolution and frame rate of the camera.

Enhanced speed of the object in the scene requires more accurate and expensive mechanical sensors. Likewise, the camera is likely to suffer from motion blur and difficult light conditions due to the factory environment or welding operations. It requires expensive high frame rate cameras and a lot of computing power as higher tracking speeds are required. Still, such cameras may suffer from difficult light conditions.

For instance, the article "Applying High-Speed Vision Sensing to an Industrial Robot for High-Performance Position Regulation under Uncertainties". Huang, S., Bergstrom, N., Yamakawa, Y., Senoo, T., & Ishikawa, M. (2016), Sensors (Basel, Switzerland), 16(8), 1195, discloses a robot system using an eye-in-hand high frame rate camera to control the robot motion in a "peg-and-hole" like application. In addition to the cost of such a high-end camera, the system requires an external PC to carry out the image processing tasks in real-time.

Therefore, a new method and system are needed for a more efficient servo control with higher performance and lower cost.

### SUMMARY

The present invention relates to a servo control method for controlling movement of a robot with respect to an object with which the robot interacts. The method comprises:
receiving events from at least one event-based light sensor, depending on variations of incident light from a workspace including the robot and the object;
processing the events to extract motion characteristics of the robot and/or the object; and
adjusting the movement of the robot according to the extracted motion characteristics.

Compared with the conventional use of frame-based cameras, especially high-frame rate industrial cameras, using event-based light sensors provides high dynamic range which is suitable for more difficult light conditions, reduces motion blur, and produces a lower data rate requiring much less computational power.

Alternatively, processing the events comprises:
detecting the motion characteristics of the robot and/or the object;
tracking the motion of the robot and/or the object.

In particular, the extracted motion characteristics may comprise coordinates, optical flow and/or motion vector of the robot and/or the object in the workspace.

In an embodiment, processing the events further comprises directly detecting and tracking the motion characteristics of the robot and/or the object. In this case, the motion characteristics are, for example, can be detected and tracked in 2D or 3D velocity field.

In another embodiment, processing the events comprises accumulating the events for a short duration into a picture, which comprises features of the robot and/or the object, including edges, interesting points, regions of interest point, and/or ridges of the robot and/or the object. The motion characteristics are then detected and tracked on the basis of the features in the accumulated picture. The short duration may be in a range of 1-30ms.

In another embodiment, events are received from a plurality of event-based light sensors, wherein the events respectively generated by each event-based light sensor are synchronized, so that they share a common timebase.

Accordingly, processing the events then comprises matching and triangulating the synchronized events, so as to obtain position and speed of 3D points corresponding to the robot and/or the object.

In yet another embodiment, adjusting the movement of the robot can be performed by means of PID controller.

Alternatively, adjusting the movement of the robot can also be performed by means of a dynamic compensation system using coarse-to-fine strategy.

In yet another embodiment, the method according to the present invention further comprises analyzing the object by means of an additional frame-based camera, so as to observe the object for further visual understanding, such as recognizing the surface pattern and posture of the object on the conveyor.

Another aspect of the present invention relates to a servo control system for controlling movement of a robot with respect to an object with which the robot interacts. The system comprises:
at least one event-based light sensor adapted to generate events depending on the variation of incident light from a defined workspace including the robot and the object;
a processor for processing the events to extract motion characteristics of the robot and/or the object; and
a controller for adjusting the movement of the robot according to the extracted motion characteristics.

In one embodiment, the event-based data processor comprises picture processing means for accumulating the events for a short duration into a picture.

In another embodiment, the event-based data processor further comprise feature detecting and tracking means for detecting and tracking motion characteristics in the picture, wherein the motion characteristics comprise edges, interesting points, regions of interest point, and/or ridges of the robot and/or the object.

In yet another embodiment, the controller for adjusting the movement of the robot is a PID controller.

Alternatively, the controller for adjusting the movement of the robot is a controller using coarse-to-fine strategy.

### BRIEF DESCRIPTION OF THE DRAWINGS

Other features and advantages of the present invention will appear in the description hereinafter, in reference to the appended drawings, where:
figure 1 shows a robotic arm and an associated servo control system according to the present invention;
figure 2 is a block diagram of the servo control system;
figure 3 is a flowchart of an illustrative method according to a first embodiment of the invention;
figure 4 shows a picture generated on the basis of events received asynchronously and accumulated in a short duration;
figure 5 is a flowchart of an illustrative method according to a second embodiment of the invention;
figure 6 is a flowchart of an illustrative method according to a third embodiment of the invention;
figure 7 is a flowchart of an illustrative method according to a fourth embodiment of the invention.

### DESCRIPTION OF EMBODIMENTS

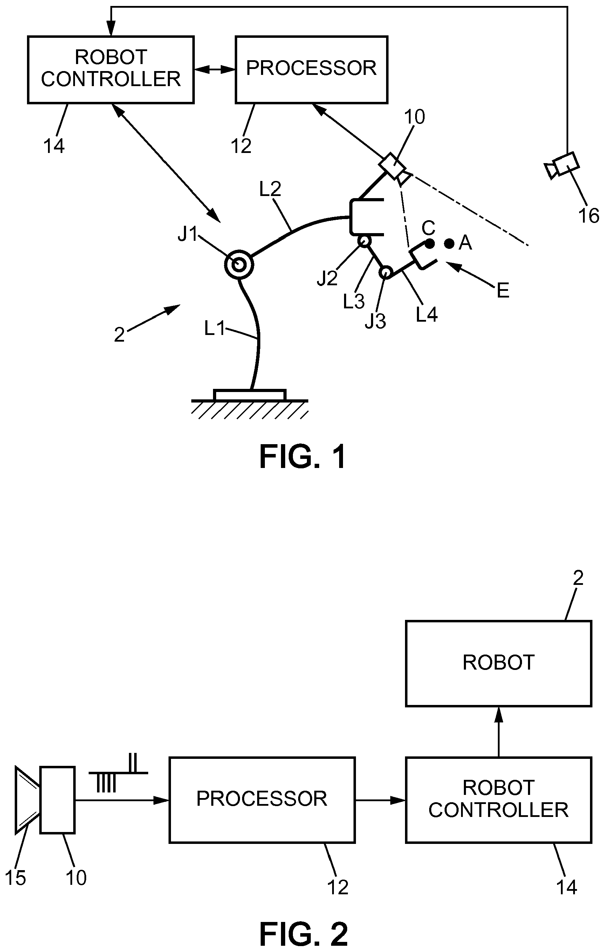

Figure 1 shows a robot which, in the illustrative example, comprises a mechanical robotic arm 2 having a chain of links L1, L2, L3, and L4 that are articulated at joints J1, J2, and J3 which are arranged between two links, such as links L1 and L2, L2 and L3, L3 and L4, and are actuated by motors. One end of the link L1 is fixed on the ground. An end effector E, also called a robot hand, is attached to the end of the chain, i.e. the free end of link L4, with an end point C. This robotic arm 2 has a number of degrees of freedoms, such as six degrees of freedoms, that allow it to reach a target object A in two or three dimensional space under a control system.

The control system comprises an event-based light sensor 10, which is, for example, fixed on the robotic arm, as shown in figure 1, so as to move long with the movement of the robotic arm 2. Alternatively, the event-based light sensor 10 may also be fixed on a rigid body outside the robotic arm 2, so as to be static.

The event-based light sensor 10 may observe a workspace including at least part of the robotic arm 2, such as the end point C, as well as the target object A. The event-based light sensor 1 generates a series of events depending on the variation of incident light from the defined workspace, especially from the robotic arm and the object in the workspace.

The event-based light sensor 10 is connected to a data processor 12 for processing the events, so as to extract motion characteristics of the robot and the object. The motion characteristics include coordinates, optical flow, and/or motion vector of the robot and/or the object in the workspace.

In an embodiment, the control system further comprises one or more frame-based cameras 16 which can be paired with the event-based light sensor 10. Similarly, the frame-based camera 16 may be mounted on the robotic arm 16 or on a static structure. When the frame-based camera 16 is mounted on the robotic arm and the fast coarse motion is handled by the event-based camera, the frame-based camera 16 can be less prone to motion blur and does not need to have a high frame rate.

The servo control system further comprises a controller 14 which receives from the processor 12 information relating to extracted motion characteristics in order to program the robotic arm 2 to move according to certain tasks, such as the alignment the end point C and a point on the object A.

Figure 2 shows the event-based light sensor 10 and its associated data processor 12. The event-based light sensor 10 is placed facing the scene in the vicinity of the robotic arm and receiving light from the scene through optics for acquisition 15 comprising one or several lenses. The sensor 10 is placed in the image plane of the optics for acquisition 15. It comprises an array of sensing elements, such as photosensitive elements, organized into a matrix of pixels. Each sensing element corresponding to a pixel produces successive events depending on variations of light in the scene.

The processor 12 processes the information originating from the sensor 10, i.e. the sequences of events received, for example asynchronously, from the various pixels. It can be implemented by programming using a suitable programming language. A hardware implementation of the processor 12 using specialized logic circuits (ASIC, FPGA, ...) is also possible.

In particular, the asynchronous sensor 10 carries out an acquisition to output a signal which, for each pixel, may be in the form of a succession of instants tₖ (k = 0, 1, 2, ...) at which an activation threshold Q is reached. Each time this luminance increases by a quantity equal to the activation threshold Q starting from what it was in time tₖ, a new instant tₖ₊₁ is identified and a spike is emitted at this instant tₖ₊₁. Symmetrically, each time that the luminance observed by the pixel decreases by the quantity Q starting from what it was in time tₖ, a new instant tₖ₊₁ is identified and a spike is emitted at this instant tₖ₊₁. The signal sequence for the pixel includes a succession of spikes positioned over time at instants tₖ depending on the light profile for the pixel. Without limitation, the output of the sensor 10 is then in the form of an address-event representation (AER). In addition, the signal sequence typically includes a luminance attribute corresponding to a variation of incident light.

The activation threshold Q can be fixed, or can be adapted as a function of the luminance. For example, the threshold can be compared to the variations in the logarithm of the luminance for generating events when exceeded.

By way of example, the sensor 10 can be a dynamic vision sensor (DVS) of the type described in "A 128×128 120 dB 15 µs Latency Asynchronous Temporal Contrast Vision Sensor", P. Lichtsteiner, et al., IEEE Journal of Solid-State Circuits, Vol. 43, No. 2, February 2008, pp. 566-576, or in patent application US 2008/0135731 A1. The dynamics of a human retina (minimum duration between the action potentials) can be approached with a DVS of this type. The dynamic behavior surpasses that of a conventional video camera that has a limited sampling frequency. When a DVS is used as the event-based sensor 10, data pertaining to an event originating from a pixel include the address of the pixel, a time of occurrence of the event and a luminance attribute corresponding to a polarity of the event, e.g. +1 for positive if the luminance increases and -1 for negative if the luminance decreases.

Another example of an asynchronous sensor 10 that can be used advantageously in the context of this invention is the asynchronous time-based image sensor (ATIS) of which a description is given in the article "A QVGA 143 dB Dynamic Range Frame-Free PWM Image Sensor With Lossless Pixel-Level Video Compression and Time-Domain CDS", C. Posch, et al., IEEE Journal of Solid-State Circuits, Vol. 46, No. 1, January 2011, pp. 259-275. When an ATIS is used as the event-based sensor 10, data pertaining to an event originating from a pixel include the address of the pixel, a time of occurrence of the event and a luminance attribute corresponding to an estimated value of the absolute luminance. The polarity of each event can also be output by the ATIS.

Alternatively, the system may also comprise a frame-based camera which is paired with the event-based light sensor, for a further visual understanding, for example for the robot to recognize the object or understand how it is placed before grabbing it.

Therefore, a secondary frame-based camera can be placed on the robot. Since the main relative motion can be canceled out by the servo control system, there will be little motion blur on the object of interest, and a low-cost frame-based camera, coupled with a low-cost processing unit, may be used.

In addition, standard frame-based computer vision algorithms may be used on the frames captured by frame-based camera or on the frames reconstructed from the stream of exposure events from the event-based light sensor.

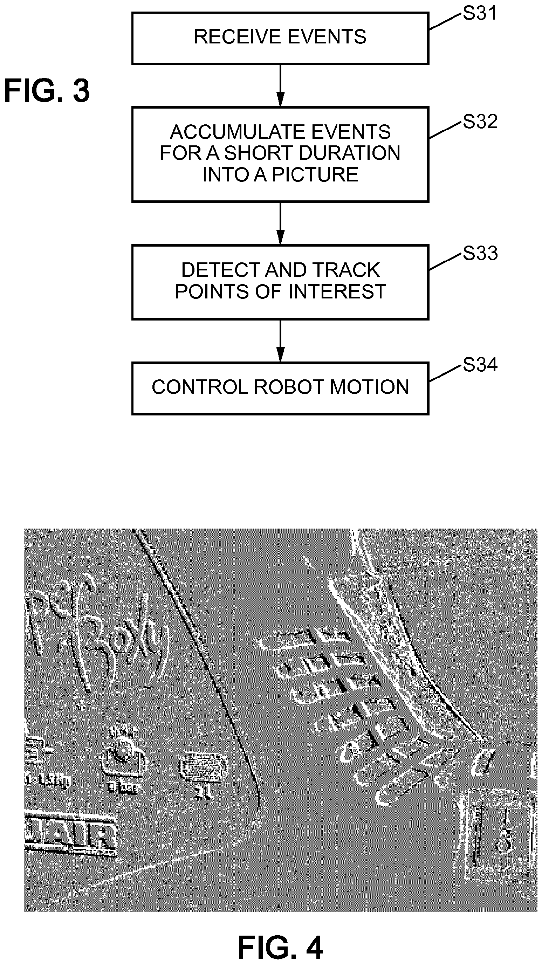

Figure 3 shows a first embodiment of a servo control method using the robotic arm in figure 1 according to the present invention. The figure shows steps performed by the processor 12 and the controller 14, typically using software.

The event-based light sensor 10 generates a series of events in response to variation of the incident light, such as contrast change, from the workspace including robotic arm and the object which are in motion in front of the event-based light sensor. Those events are received by the processor 12 from the sensor 10 at step S31 shown in figure 3.

The received events are accumulated by the processor 12 at step S32 for a short duration, or timeslice, so as to form a picture or a frame. By way of example, the duration may be in a range of 1-30 ms. A positive polarity of events may be represented as white pixels in the accumulated picture, and negative polarity of events as black pixels, such as shown on Figure 4. In the regard, the shape of objects in motion is recognizable.

The obtained picture is representative of the features of the objects in motion during the timeslice. The features may include edges, interesting points, regions of interest point, and/or ridges of the objects and/or the robot 2. For example, a point on object A and end point C, forming interesting points respectively on the object and the robot, can then be detected and tracked (S33) by the processor 12 in this picture using standard object detection techniques, like template matching, line, blob or corner detectors. The choice of the technique depends on the object points to be detected.

Moreover, once the interesting points are detected, low-complexity and low-latency tracking methods can regularly update the coordinates of the interesting points. These methods are, for example, discussed in the article "Asynchronous Event-Based Multikernel Algorithm for High-Speed Visual Features Tracking", Xavier Lagorce, Sio-Hoi Heng, David Filliat, Ryad Benosman, IEEE transactions on Neural Networks and Learning Systems, September 2014.

On the basis of the coordinates of the interesting points regarding the motion characteristics, the controller 14 can then adjust and control the robot motion at step S34. This can be done by means of conventional control methods, for example, using a PID controller or a dynamic compensation system using coarse-to-fine strategy, as the one discussed in the article, "Applying High-Speed Vision Sensing to an Industrial Robot for High-Performance Position Regulation under Uncertainties", Huang, S., Bergstrom, N., Yamakawa, Y., Senoo, T., & Ishikawa, M. (2016). Sensors (Basel, Switzerland).

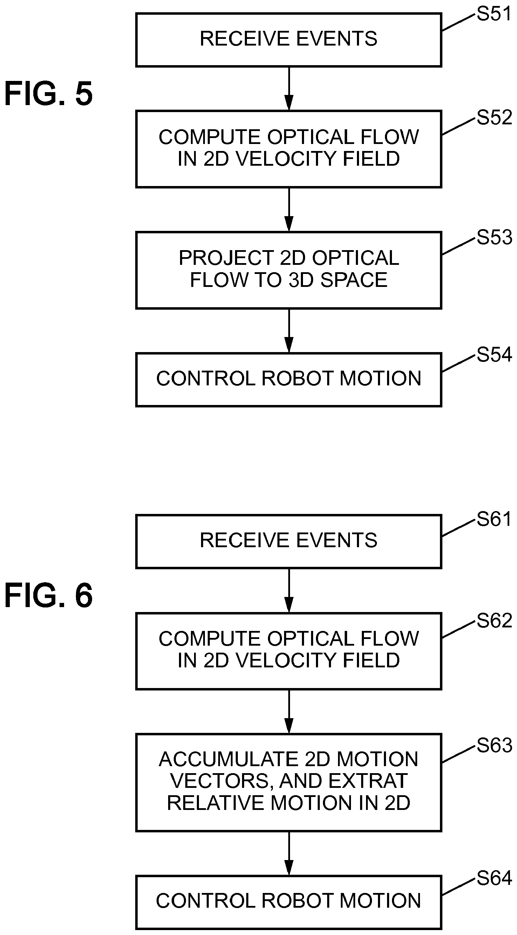

Figure 5 shows a second embodiment of a servo control method using the robotic arm in figure 1 according to the present invention.

In this second embodiment, like in the first embodiment, the processor 12 receives, at step S51, a series of events from the event-based light sensor 10 in response to variation of the incident light, such as contrast change, from the workspace including the robotic arm 2 and the object A which are in motion in front of the event-based light sensor.

When the processor 12 receives the events, it is not necessary to accumulate the events into a picture. A more straightforward approach is implemented to characterize the motion sensed by the event-based light sensor 10 in terms of speed and position of the moving object and/or the robot, by means of an event-based optical flow algorithm, such as the one discussed in the article, "Event-Based Visual Flow", Ryad Benosman, Charles Clercq, Xavier Lagorce, Sio-Hoi Ieng, Chiara Bartolozzi", IEEE Transactions on Neural Networks and Learning Systems, February 2014.

In this regard, the event-based light sensor 10 and the associated processor 12 inherently react to motion, without identifying points of interests. In particular, as events are received, the optical flow is computed at step S52 so as to obtain a 2D velocity field. A velocity vector and position of the events observed by the event-based sensor 10 can then be measured.

When knowing the trajectory of moving objects, or the position of a conveying belt on which the objects are situated, the 2D optical flow measured on the event-based sensor can be interpreted in terms of a 3D velocity field by a method as discussed in the article "Vehicle Tracking and Speed Estimation using Optical Flow Method", S. Indu, M. Gupta and A. Bhattacharyya, in International Journal of Engineering Science and Technology (IJEST), Vol. 3 No. 1 Jan 2011. This can characterize the 3D location and 3D vector speed of the moving project by projecting back the 2D velocity field to the known trajectory (S53).

Then it is possible to send control commands to the robotic arm 2 to adjust its position and speed to match the moving object by means of a PID controller or a dynamic compensation system using coarse-to-fine strategy (step S54) as mentioned in the first embodiment.

In the second embodiment, the event-based light sensor 10 can be mounted on the robotic arm 2, as shown in figure 1, or statically placed, for example, on a rigid frame in a factory. When the event-based light sensor 10 is mounted on the robotic arm 2, the 3D velocity field is relative to the robotic arm, and the controller 14 differentially adjusts its position. When the event-based light sensor 10 is static, the 3D velocity field is absolute, and the controller 14 takes into account the current position of the robotic arm 2 to adjust it to the moving object A.

Figure 6 shows a third embodiment, which is a variant of the second embodiment.

In the third embodiment, the event-based light sensor 10 is mounted on the robotic arm 2 and generates a series of events in response to variation of the incident light, such as contrast change, from the workspace including the robotic arm 2 and the object A which are in motion in front of the event-based light sensor 10.

Similarly to the second embodiment, as events are received by the processor 12 at step S61, the optical flow is computed by the processor 12 at step S62 so as to analyze the relative motion between the object A and the robotic arm 2 with an optical flow algorithm.

The difference is that the computed optical flow is not interpreted in terms of 3D motion, but simply analyzed relatively to the robot motion. In particular, the optical flow 2D motion vectors are accumulated for a short duration, allowing extracting the main apparent relative motion of the moving objects, by averaging the 2D motion vectors or taking the median value at step S63. Then the controller 14 adjusts, at step S64, the motion and speed of the robotic arm 2 progressively to zero out the relative motion, without trying to get an absolute object speed measurement.

For instance, if an object is detected moving from left to right, with a constant speed, the apparent relative motion will be a vector pointing to the right. The controller 14 will send commands to the robotic arm to start moving to the right. Because the robotic arm 2 started moving to the right, the apparent relative motion for the incoming events from the light sensor will still be a vector pointing to the right, but with smaller amplitude. The controller 14 will continue increasing the speed of the robot until the apparent motion vector becomes zero, which means the robotic arm 2 and object A have the same motion.

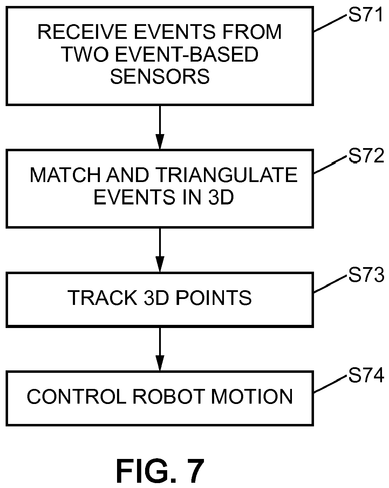

Figure 7 shows a fourth embodiment of a servo control method using a stereo acquisition system including a plurality of event-based light sensors.

In the example shown, the stereo acquisition system comprises two event-based light sensors, for example a left and a right light sensors, which are separated by a baseline and synchronously observe the workspace. They can be placed statically on a rigid frame in the factory or mounted on the robotic arm 2.

Even if no a priori information is available on the object trajectory or distance, the speed and position of moving objects can still be acquired by the stereo acquisition system.

In particular, the left and right event-based light sensors respectively generate series of events in response to variation of the incident light, such as contrast change, from the workspace including robotic arm 2 and the object A which are in motion in front of the event-based light sensors.

The clocks that timestamp the events on each light sensor can be synchronized together, so that events from the two event-based light sensors share a common timebase. The geometry of the stereo acquisition system is fully known through a calibration phase for the intrinsic (i.e. intra-sensor) and extrinsic (i.e. inter-sensor) parameters.

When an object moves in front of the two light sensors, it causes both light sensors to respectively generate events, which are assumed highly correlated in time. The events from both light sensors are received by the processor 12 at step S71 and can then be matched and triangulated at step S72. This provides the 3D points in space and time which generated the events. These 3D points correspond to the position of moving objects in the 3D space.

Additionally, the 3D triangulated points can be tracked in time and space by the processor 12 at step S73. One simple way to track them is to associate to every detected 3D point, the former 3D point closest to them in time and space, and derive a 3D speed measurement.

From the position and speed of 3D points of moving objects, the controller 14 can send signals to the robotic arm 2, so as to adjust the motion of the latter at step S74.

The above-described methods may be implemented using program instructions recorded in non-transitory computer-readable media to implement various operations which may be performed by a computer. The media may also include, alone or in combination with the program instructions, data files, data structures, and the like. The program instructions recorded on the media may be those specially designed and constructed for the purposes of the illustrative embodiments, or they may be of the well-known kind and available to those having skill in the computer software arts. Examples of non-transitory computer-readable media include magnetic media such as hard disks, floppy disks, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as code produced by a compiler, and files containing higher level code that may be executed by the computer using an interpreter. The described hardware devices may be configured to act as one.

The embodiments described hereinabove are illustrations of this invention. Various modifications can be made to them without leaving the scope of the invention which stems from the annexed claims.

## Claims

1. A servo control method for controlling movement of a robot (2) with respect to an object (A) with which the robot interacts, the servo control method comprising:
receiving events from at least one event-based light sensor (10), depending on variation of incident light from a workspace including the robot and the object;
processing the events to extract motion characteristics of the robot and/or the object; and
adjusting the movement of the robot according to the extracted motion characteristics.

2. The servo control method according to claim 1, wherein processing the events comprises:
detecting the motion characteristics of the robot (2) and/or the object (A);
tracking the motion of the robot and/or the object.

3. The servo control method according to claim 1, wherein the extracted motion characteristics comprise coordinates, optical flow, and/or motion vector of the robot (2) and/or the object (A) in the workspace.

4. The servo control method according to claim 3, wherein the motion characteristics are detected and tracked in 2D or 3D velocity field.

5. The servo control method according to claim 1, wherein processing the events comprises accumulating the events into a picture.

6. The servo control method according to claim 5, wherein the picture comprises features of the robot (2) and/or the object (A), including edges, interesting points, regions of interest point, and/or ridges of the robot and/or the object.

7. The servo control method according to claim 6, wherein the motion characteristics are detected and tracked on the basis of the features in the accumulated picture.

8. The servo control method according to claim 1, wherein events are received from a plurality of event-based light sensors, wherein the events respectively generated by each event-based light sensor are synchronized, so that they share a common timebase.

9. The servo control method according to claim 8, wherein processing the events comprises matching and triangulating the events, so as to obtain position and speed of 3D points corresponding to the robot (2) and/or the object (A).

10. The servo control method according to claim 1, wherein adjusting the movement of the robot (2) is performed by means of a PID controller or a dynamic compensation system using coarse-to-fine strategy.

11. The servo control method according to claim 1, further comprising analyzing the object (A) by means of a frame-based light sensor (16).

12. A servo control system for controlling movement of a robot (2) with respect to an object (A) with which the robot interacts, comprising:
at least one event-based light sensor (10) adapted to generate events including a series of events depending on variation of incident light from a defined workspace including the robot and the object;
a processor (12) for processing the events to extract motion characteristics of the robot and/or the object; and
a controller (14) for adjusting the movement of the robot according to the extracted motion characteristics.

13. The servo control system according to claim 12, wherein the processor (12) is configured to accumulate the events into a picture.

14. The servo control system according to claim 13, wherein the processor (12) is configured to detect and track features in the picture so as to extract the motion characteristics, wherein the features comprise edges, interesting points, regions of interest point, and/or ridges of the robot and/or the object.

15. The servo control system according to claim 12, wherein the controller (14) comprises a PID controller or a controller using coarse-to-fine strategy.
